# EUROPEAN PATENT APPLICATION

(11) **EP 2 333 217 A1**
(43) Date of publication of application: **15.06.2011**
(21) Application number: 09812554.5
(22) Date of filing: 09.09.2009
(51) Int. Cl.: E05F 5/00

(54) **DRAINAGE SYSTEM USING A DIFFUSING GEOCOMPOSITE**

(30) Priority: 09.09.2008 BR MU8801991 U
(71) Applicant: Nascimento Da Costa, Luiz Ribeiro Oliveira, Itapecirica da Serra - SP, Cep: 06850-100 (BR); Klemp Rego, Omar Natam, São Paulo - SP, Cep: 01314-001 (BR)
(72) Inventor: Nascimento Da Costa, Luiz Ribeiro Oliveira, Itapecirica da Serra - SP, Cep: 06850-100 (BR); Klemp Rego, Omar Natam, São Paulo - SP, Cep: 01314-001 (BR)
(74) Representative: Guérin, Jean-Philippe
(86) International application number: PCT/BR2009/000283
(87) International publication number: WO 2010/028466

(57) **Abstract**

To be used in sub-horizontal trenches and vertical wells, and to perform a dual function, namely, promoting the uptake of rainwater infiltrated into the soil, whose flow will be initially conducted in a horizontal direction, promoting, then its vertical diffusion along the substrate of the ground to recharge the ground water and the local aquifer, thus helping to minimize the surface flows, becoming an important tool for flood prevention and environment protection, recharging thus the water sources.

## Description

### TECHNICAL FIELD

The present specification refers to **GEOCOMPOSITE DIFFUSER** which will be used in sub-horizontal trenches and vertical wells, and to perform two functions, namely, promoting the uptake of rainwater infiltrated into the soil, whose flow will be initially conducted in horizontal direction, promoting then its vertical diffusion along the substrate of the ground to recharge the local aquifer, thus contributing to minimization of surface flows, becoming an important tool for flood prevention.

### SUMMARY

The present **GEOCOMPOSITE DIFFUSER** has its application oriented to residential or industrial urban areas, and it also can be used in environmentally protected areas (APAs) and permanent preservation areas (APPs), and has reduced dimensions, which enables the achievement of water drainage and diffusion works in areas of low surface extension, and its installation is done without the use of gravel and sand, contributing to the reduction of environmental impacts as environmental asset in areas within these fields, while allowing the work is carried out using a continuous ditcher, which, besides resulting in increased productivity, contributes to reducing excavated volume, thus streamlining the task of disposing the excavated material.

### PRIOR ART REFERENCE

There are geocomposites already known to the current state of the art which are used in soil drainage, for example, the model described in Patent Application BRMU-7802224-0, which is a flexible, extensible geocomposite drainage for sub-superficial and deep drain, comprising a structured body of spirals, hoops or rings of various sections, and made of high strength plastic material which are bound together by high strength strands, and this whole body being covered in its entire perimeter by a coarse cotton cloth, woven or not, topped with synthetic resin, or any other suitable product for this purpose, presenting a compact and reduced shape, and when used, it is positioned horizontally on site so that it can then be grounded without undergoing significant distortion due to resistance offered by the product's structural spirals, hoops or plastic rings.

Despite the excellent performance delivered by this extensible geocomposite it has been observed in practice the need to enhance diffusion in the vertical flow of the collected water, taking into account that in the model described above the diffusion occurs more sharply and horizontally, slowing thereby the recharge of the local aquifer, which in some situations can generate a disadvantage, e.g. on slopes.

### BACKGROUND OF THE INVENTION

In order to overcome all the inconveniences arising from the current techniques, the **GEOCOMPOSITE DIFFUSER** proposed herein was conceived, and which consists of horizontal diffuser body, structured by annular elements which can be in various formats and are made of material suitable for this purpose, being further coated by a coarse cotton cloth, and this horizontal diffuser can be installed underneath a porous base, disposed inferiorly to the cover of the path, intermediated by a transitional section to promote the spread of the sub-horizontal flow of water captured through the gutter, and which below said horizontal diffuser, a vertical diffuser body will be installed for diffusion reorientation of the collected water flow from horizontal direction to vertical direction, said vertical diffuser being also structured by vertical annular elements that can be in various formats, also made of material suitable for this purpose, being also coated by geosynthetic coarse cotton cloth, to launch the collected water flow directly into ground water or, in the case of deeper aquifers, to promote its recharge by guiding ducts.

### BRIEF DESCRIPTION OF DRAWINGS

For a better understanding of the **GEOCOMPOSITE DIFFUSER** proposed herein, we now refer to the attached drawings in which:

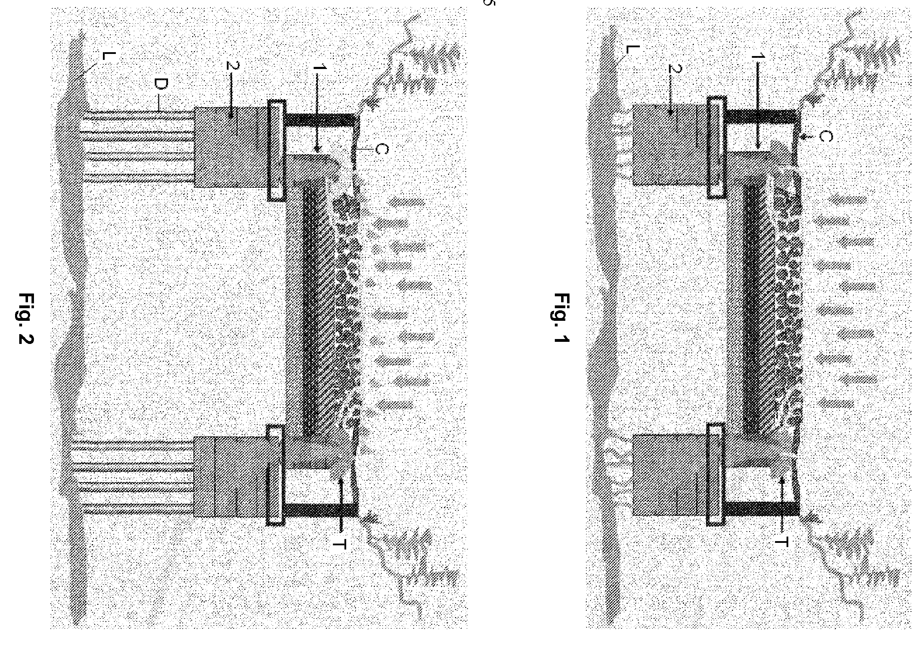

Figure 1 - shows a view of an exemplary implementation of the proposed geocomposite diffuser arranged in association with the horizontal extensible geocomposite for use in areas where the ground water is less shallow;
Figure 2 - shows a view of an exemplary implementation of the proposed geocomposite diffuser arranged in association with the horizontal extensible geocomposite for use in areas where ground water is more deep;

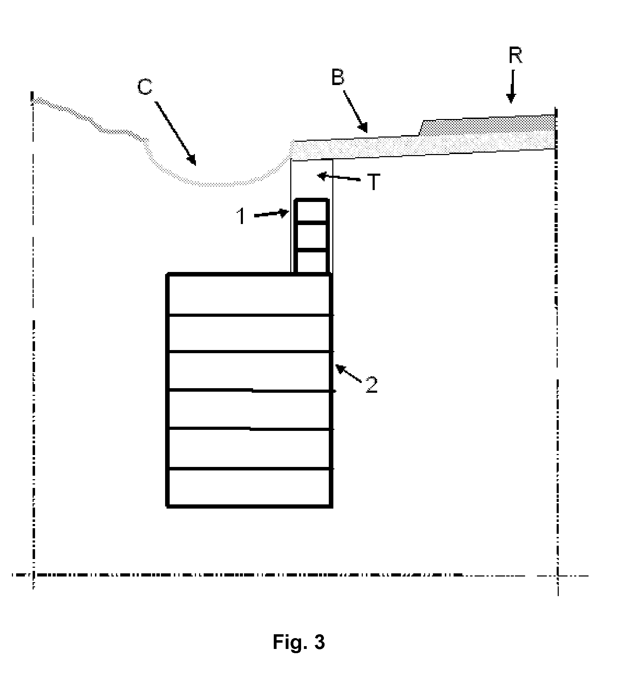

Figure 3 - shows an enlarged view of an exemplary implementation of the proposed diffuser geocomposite in association with the horizontal extensible geocomposite.

### PREFERRED EMBODIMENT OF THE MODEL

In accordance with the appended figures the **GEOCOMPOSITE DIFFUSER** proposed herein consists of a horizontal diffuser body (1) which is ring-structured by elements that may be in various formats and are made of material suitable for this purpose, being further coated by a geosynthetic coarse cotton cloth, and said horizontal diffuser can be installed underneath a porous base (B) arranged inferiorly to cover path (R), mediated by a transition section (T), to promote sub-horizontal diffusion of the collected water flow through the gutter (C), and this horizontal diffuser can have heights ranging from 10 to 40 cm, and their structural components height ranging from 1 to 3 cm, and thickness ranging from 1 to 2 cm, with spaces between them which can vary from 5 to 15 cm, depending on the type of terrain, and the geosynthetic coarse cotton cloth according to the soil survey project conditions, may have an outflow ability varying from 2.0 to 12.0 L/s vertically, and from 4.0 to 14.0 L/s horizontally, wherein below said horizontal diffuser it will be installed a vertical diffuser body (2) for reorientation of the collected water flow, from horizontal direction to vertical direction, said vertical diffuser being also structured by annular elements that can be in various formats, also made of material suitable for this purpose, and also coated by geosynthetic coarse cotton cloth, wherein its width varies from 20 to 100 cm, and its components with height varying from 2 to 10 cm and thickness ranging from 1 to 5 cm, and which are stacked with spacing between them varying from 4 to 20 cm, depending on the type of terrain, and wherein the geosynthetic coarse cotton cloth, in accordance with the conditions of the soil survey project, can have flow capacity ranging from 8 to 35 L/s for releasing the collected water flow directly into the groundwater (L), or in the event of deeper aquifers, to promote its recharge through guiding ducts (D).

## Claims

1. **GEOCOMPOSITE DIFFUSER** comprising a horizontal diffuser body (1) which is ring-structured by elements that may be in various formats and are made of material suitable for this purpose, being further coated by a geosynthetic coarse cotton cloth, and said horizontal diffuser can be installed underneath a porous base (B) arranged inferiorly to cover path (R), mediated by a transition section (T), to promote sub-horizontal diffusion of the collected water flow through the gutter (C), and this horizontal diffuser can have heights ranging from 10 to 40 cm, and their structural components height ranging from 1 to 3 cm, and thickness ranging from 1 to 2 cm, with spaces between them which can vary from 5 to 15 cm, depending on the type of terrain, and the geosynthetic coarse cotton cloth according to the soil survey project conditions, may have an outflow ability varying from 2.0 to 12.0 L/s vertically, and from 4.0 to 14.0 L/s horizontally, wherein below said horizontal diffuser it will be installed a vertical diffuser body (2) for reorientation of the collected water flow, from horizontal direction to vertical direction, said vertical diffuser being also structured by annular elements that can be in various formats, also made of material suitable for this purpose, and also coated by geosynthetic coarse cotton cloth, wherein its width varies from 20 to 100 cm, and its components with height varying from 2 to 10 cm and thickness ranging from 1 to 5 cm, and which are stacked with spacing between them varying from 4 to 20 cm, depending on the type of terrain, and wherein the geosynthetic coarse cotton cloth, in accordance with the conditions of the soil survey project, can have flow capacity ranging from 8 to 35 L/s for releasing the collected water flow directly into the groundwater (L), or in the event of deeper aquifers, to promote its recharge through guiding ducts (D).
